# EUROPEAN PATENT APPLICATION

(11) **EP 1 480 433 A2**
(43) Date of publication of application: **24.11.2004**
(21) Application number: 04008194.5
(22) Date of filing: 05.04.2004
(51) Int. Cl.: H04M 11/00

(54) **A device for remotely monitoring and controlling functions, particularly for home use**

(30) Priority: 22.05.2003 IT TO20030378
(71) Applicant: Urmet Domus S.p.A., 10154 Torino (IT)
(72) Inventor: Minarelli, Giorgio, 10129 Torino (IT)
(74) Representative: Spandonari, Carlo, Dr. Ing.

(57) **Abstract**

A control unit (20) is shunt-connected to a cabled telephone line (10) through a telephone set having caller-identification means and SMS-message decoder means (18). The control unit has a number of outputs (40, 42) controlling the activation of an equal number of appliances, based on predetermined SMS messages received from authorized callers. The monitoring device is equipped for connection to one or more video cameras (35) and for transmitting over the telephone line MMS messages containing images obtained from said video cameras, to predetermined addressees, upon their request or according to a program.

## Description

This invention is concerned with improvements in remote devices for monitoring and controlling functions, particularly for home use.

A prior patent filed by the applicant, Italian Appln. No. T02002 A000270, filed on 27 March 2002, discloses a device which, via a PSTN telephone connection, can control different functions in homes, such as adjusting the thermostat of a heating or air-conditioning installation, enabling or disabling a video-recorder or a fire or burglar alarm system, and controlling or programming a number of different appliances, e.g. for watering gardens or apartment plants, for feeding pets, etc. The device described in the above patent application will further monitor desired functions such as the ambient temperature, the alarm status of a burglar alarm system and the nature of the trespassing, the environment noises in the room (room monitoring) and other, by way of predetermined SMS messages sent to a predetermined addressee.

It is now the object of the invention to improve the above device for remotely controlling functions by telephone, by extending its flexibility and broadening its monitoring capabilities.

The above and other objects and advantages, such as will appear from the following disclosure, are achieved, according to the invention, by a device for remotely monitoring and controlling functions, particularly for home appliances, which has the features recited in the main claim.

Other advantageous features are set out in the dependent claims.

A few preferred embodiments of the invention are disclosed below, as non-limiting examples, with reference to the attached drawing, wherein:
Fig. 1 is a general diagram of a preferred embodiment of a remote monitoring and controlling device, which is installed in a home;
Fig. 2 is a partial block diagram of a modification of the device of Fig. 1.

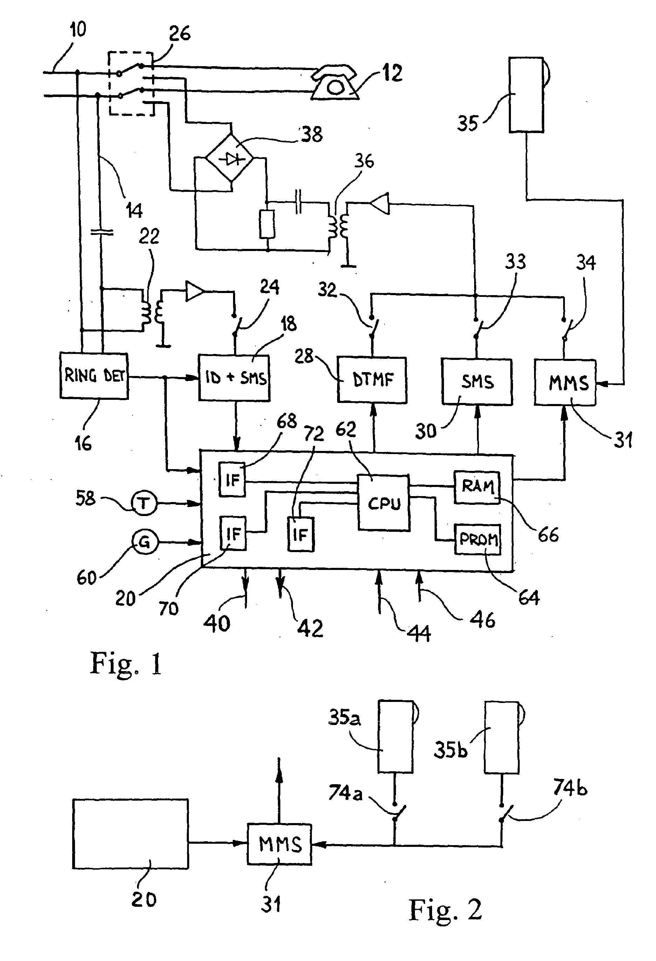

With reference to Fig. 1, a telephone pair 10 of a cabled telephone network leads to one or more conventional telephone sets such as 12 in premises not shown. Pair 10, via a branch-off pair 14, is also connected to a ring detector 16 and to a caller-id and SMS-message decoder 18, which interact with each other and with a control unit 20, as described below. While ring detector 16 receives the signal directly over the telephone pair 14, decoder 18 receives the signal through an isolating transformer 22 and a reception-enabling switch 24.

A two-way switch 26 is connected in telephone pair 10, so that control unit 20 can engage telephone line 10 via the switch and originate a call. To this purpose, control unit 20 controls a DTMF coder 28, an SMS-message coder 30 and also an MMS-message coder 31. These coders, via respective enabling switches 32, 33, 34, an isolation transformer 36 and a rectifier bridge 38, can send dialing tones and data on line 10, by way of switch 26.

For the sake of simplicity, Fig. 1 does not show control means for switches 24, 26, 32, 33, 34, since such control means will be obvious for a person skilled in the art.

MMS-message coder 31 receives video signals from a camera 35 located for surveying an area to be monitored, such as a room, an outdoor area in front of the main door, a parking lot, etc.

Control unit 20 has a number of relay outputs such as 40, 42 and alarm inputs such as 44, 46, as well as inputs from sensors such as 58 and 60, as disclosed in the above prior patent, and about which, consequently, no further details are given here.

Control unit 20 is a processing unit comprising, obviously for a person skilled in the art, a microprocessor 62 which is connected with a bank of permanent memory 64, with a bank of RAM memory 66, and with I/O interfaces such as 68, 70, 72 for interaction with the different appliances.

Control unit 20 is programmed for checking, at each incoming telephone call, the caller's identity, and, whenever the latter corresponds to one of the authorized identities, for interpreting any received SMS commands from a dictionary of instruction messages contained in its memory, and for emitting through its outputs appropriate commands to desired appliances, either as on/off commands or as more elaborate codes, as further explained below. Moreover, control unit 20 is able to engage telephone line 10 via switch 26 and, either because of a received interrogation message, or because of an alarm sent by one of the appliances under supervision, to call a predetermined number and emit an SMS message showing a condition such as the ambient temperature, an electric power breakdown, an alarm, etc.

The SMS messages may be sent from any cell telephone or even from a fixed telephone, if the administrator of the network provides this service, but it is also envisaged that a service center may be established, to which the user supplies suitable information by voice, so that the service center may then place a call with an appropriate SMS message.

Beside sending SMS messages through coder 30, control unit 20 is able to instruct the MMS coder to pick a single image from the video flow generated by camera 35, compress the image to a supported format (such as JPEG) and code and send an MMS message to the fixed-network gateway, so that it may be forwarded to an MMS server for delivery to the desired final addressee.

It will, however, be obvious for a person skilled in the art that, in order to provide the above functions, the control unit must be able to implement not only the SMS protocol, but also the IP, TCP and HTTP protocols, which are required for sending MMS messages to an MMS cabled-network gateway.

The MMS message may be transmitted by the inventive device at programmed moments (e.g., every day at a given time) or, alternatively, whenever control unit 20 receives a predetermined signal at one or more of its local inputs 44, 46 (say an alarm signal from a burglar alarm system), or a specified value from one of sensors 58, 60 (say a temperature exceeding a threshold), or whenever it receives an SMS command.

For instance, when a user wishes to see the scene surveyed by the camera, he must send a message <Camera>, to which control unit 20 will react by enabling MMS coder 31 to transmit an MMS over the telephone line.

The device of the invention can easily be equipped for connection with a plurality of video cameras. With reference to Fig. 2, the device will in this case still comprise a single MMS coder 31, to which two cameras 35a, 35b are connected in parallel through respective switches 74a, 74b, the latter switches being enabled by corresponding outputs of control unit 20, as it will be obvious for a person skilled in the art.

Programming the control unit so that the above described functions are provided is obvious for a person skilled in the art, and may be implemented in different ways depending on the hardware, on the choice of basic software, etc. Accordingly, for simplicity, the software of the unit is not discussed here.

Preferred embodiments of the invention have been described, but other versions and changes are of course possible, within the scope of the attached claims.

## Claims

1. A device for remotely controlling and monitoring functions, particularly for domestic appliances, comprising a control unit (20) that is shunt-connected to a cabled telephone line (10) through a telephone set having caller-identification means and SMS-message decoder means (18) and having a number of outputs controlling the activation of an equal number of appliances, based on predetermined SMS messages received from authorized callers, **characterized in that** the device also comprises an MMS coder (31) connectable to a video camera (35) and that the device is capable of transmitting over the telephone line, to predetermined addressees, MMS messages containing images obtained from said video camera and generated by said MMS coder with IP, TCP and HTTP protocols.

2. The controlling and monitoring device of claim 1, **characterized in that** the control unit (20) sends the message to an MMS server through a cabled-network gateway, so that it is forwarded to an addressee.

3. The controlling and monitoring device of claim 1 or 2, **characterized in that** the control unit (20) enables transmission of said MMS message by the MMS coder (31) at predetermined, programmed instants.

4. The controlling and monitoring device of any of claims 1 to 3, **characterized in that** the control unit (20) enables transmission of said MMS message by the MMS coder (31) on reception of a predetermined SMS message from an authorized caller.

5. The controlling and monitoring device of any of claims 1 to 4, **characterized in that** the control unit (20) is also provided with data inputs (44, 46, 58, 60) connectable to devices or sensors capable of detecting desired conditions and is capable of enabling transmission of said MMS message by the MMS coder (31) on reception of predetermined signals on one or more of said data inputs.

6. The controlling and monitoring device of any of claims 1 to 5, **characterized in that** said MMS coder (31) is connectable to a plurality of videocameras (35a, 3 5b) through respective switches (74a, 74b) which are operable by said control unit (20).
